# EUROPEAN PATENT APPLICATION

(11) **EP 4 629 370 A1**
(43) Date of publication of application: **08.10.2025**
(21) Application number: 25156413.4
(22) Date of filing: 07.02.2025
(51) Int. Cl.: H01M 10/04, H01M 10/0525, H01M 10/0583, H01M 50/46, H01M 50/466

(54) **METHOD FOR PREPARING LAMINATED BATTERY CELL**

(30) Priority: 03.04.2024 CN 202410405978; 11.07.2024 WO PCT/CN2024/104940
(71) Applicant: Eve Power Co., Ltd., Jingmen, Hubei 448000 (CN)
(72) Inventor: CHEN, Liquan, Jingmen, Hubei, 448000 (CN); LI, Weibo, Jingmen, Hubei, 448000 (CN); HE, Wei, Jingmen, Hubei, 448000 (CN); LIU, Jincheng, Jingmen, Hubei, 448000 (CN); CHEN, Wei, Jingmen, Hubei, 448000 (CN); YUAN, Dingding, Jingmen, Hubei, 448000 (CN); SU, Bin, Jingmen, Hubei, 448000 (CN)
(74) Representative: Berggren Oy

(57) **Abstract**

A method for preparing a laminated battery cell is provided. The method comprises steps of: providing a negative electrode sheet, a positive electrode sheet, and a membrane; thermally bonding the negative electrode sheet and the positive electrode sheet to the membrane to form a thermally bonded structure; forming a plurality of folding structures in the thermally bonded structure, wherein i positive electrode sheets are arranged between every two adjacent folding structures, and i is a positive integer; folding the thermally bonded structure along each straight line where each of the folding structures is located to prepare the laminated battery cell. In the present disclosure, the folded position is fixed, so that the alignment of the positions on both sides of each electrode sheet during folding is improved, and subsequent investment and process of a shaping equipment are eliminated.

## Description

### TECHNICAL FIELD

This application belongs to the technical field of batteries, and in particular relates to a method for preparing a laminated battery cell.

### BACKGROUND

Currently, battery cells are mainly manufactured by folding or winding processes. Laminated battery cells have been widely used by virtue of numerous advantages thereof. Electrode sheets of the laminated battery cell are in a free-fall manner during the folding process, and negative electrode sheets and positive electrode sheets of the laminated battery cell are misaligned, so that the alignment of the laminated battery cell is poor. During the process of charging a battery, lithium ions are detached from the positive electrode sheets and embedded in the negative electrode sheets. Due to the misalignment between the positive electrode sheets and the negative electrode sheets, not all the lithium ions can be embedded in the negative electrode sheets, and the lithium ions that are not embedded into the negative electrode sheets can only capture electrons on the surface of the negative electrode sheets, thereby forming a white metallic lithium elementary substance, and resulting in lithium precipitation. Lithium precipitation greatly shortens the service life of the battery and limits the fast charging capacity of the battery, and may also cause combustion and explosion, posing safety hazards, thereby the performance of the battery is degraded.

In the prior art, in order to improve the alignment of the laminated battery cell, a shaping process is incorporated into the process of manufacturing the laminated battery cell. After a thermally bonded unit has been folded in a free-fall manner to form a battery cell, the battery cell is clamped by a shaping cylinder from both sides of the battery cell, so that all the electrode sheets of the battery cell are aligned. Despite the battery cell is shaped by the shaping cylinder, there is still a problem of poor alignment of the battery cell. Moreover, during the process of shaping by the shaping cylinder, there is a risk of powder falling from the electrode sheets, so that the risk of short circuits in the battery cell pack is increased.

### SUMMARY

Embodiments of the present application provides a method for preparing a laminated battery cell, where folding structures are formed in a thermally bonded structure, and the thermally bonded structure is folded along the folding structures, so that the technical effects of good folding quality, high folding efficiency, and good alignment are achieved.

An embodiment of the present application provides a method for preparing a laminated battery cell, comprising:
providing a negative electrode sheet, a positive electrode sheet, and a membrane;
thermally bonding the negative electrode sheet and the positive electrode sheet to the membrane to form a thermally bonded structure;
forming a plurality of folding structures in the thermally bonded structure, wherein i positive electrode sheets are arranged between every two adjacent folding structures, and i is a positive integer; and
folding the thermally bonded structure along each straight line where each of the folding structures is located to prepare a laminated battery cell.

In the method for preparing a laminated battery cell according to the embodiments of the present disclosure, a negative electrode sheet and a positive electrode sheet are thermally bonded to a membrane to form a thermally bonded structure, and a plurality of folding structures are formed in the thermally bonded structure, wherein i positive electrode sheets are arranged between every two adjacent folding structures, and the thermally bonded structure is folded along each straight line where each of the folding structures is located. Therefore, the position for each folding is fixed, and the alignment of the electrode sheets in folding is ensured, and the subsequent investment and process of a shaping equipment are eliminated. The structural strength at the positions of the folding structures is strong enough to prevent the membrane from being pulled apart. Moreover, the position for each folding of the thermally bonded structure is fixed, so that the alignment of the laminated battery cell is improved, the probability of the occurrence of lithium precipitation is reduced, and the electrical performance of the laminated battery cell is enhanced in terms of service life, fast charging capacity, and safety.

### BRIEF DESCRIPTION OF THE DRAWINGS

In order that the technical solutions in the embodiments of the present application may be explained more clearly, a brief description will be given below to the accompanying drawings for use in the description of the embodiments. Obviously, the accompanying drawings in the following description are merely some of the embodiments of the present disclosure, and other drawings can be obtained based on these drawings without involving any creative efforts to those skilled in the art.

For the sake of a complete understanding of the present application and its advantages, reference will now be made to the accompanying drawings. In the following description, same reference numerals refer to same parts.
FIG. 1 is a perspective view of a laminated battery cell prepared by the method for preparing a laminated battery cell according to an embodiment of the present disclosure.
FIG. 2 is a schematic diagram of one example of a thermally bonded structure in the method for preparing a laminated battery cell according to an embodiment of the present disclosure.
FIG. 3 is a schematic view of a bonded battery cell group with the thermally bonded structure of FIG. 2 folded.
FIG. 4 is a schematic diagram of Example 1 of the thermally bonded structure in the method for preparing a laminated battery cell according to an embodiment of the present disclosure.
FIG. 5 is a schematic view of the laminated battery cell with Example 1 of the thermally bonded structure folded.
FIG. 6 is an enlarged view of part Ain FIG. 5.
FIG. 7 is a schematic diagram of Example 2 of the thermally bonded structure in the method for preparing a laminated battery cell according to an embodiment of the present disclosure.
FIG. 8 is a schematic view of the laminated battery cell with Example 2 of the thermally bonded structure folded.
FIG. 9 is an enlarged view of part B in FIG. 8.
FIG. 10 is a schematic diagram of Example 3 of the thermally bonded structure in the method for preparing a laminated battery cell according to an embodiment of the present disclosure.
FIG. 11 is a schematic diagram of a laminated battery cell upon with Example 3 of the thermally bonded structure folded.
FIG. 12 is an enlarged view of part C in FIG. 11.
FIG. 13 is a schematic diagram of Example 4 of the thermally bonded structure in the method for preparing a laminated battery cell according to an embodiment of the present disclosure.
FIG. 14 is a schematic view of a laminated battery cell with Example 4 of the thermally bonded structure folded.
FIG. 15 is a schematic diagram of Example 5 of the thermally bonded structure in the method for preparing a laminated battery cell according to an embodiment of the present disclosure.
FIG. 16 is a schematic view of a laminated battery cell with Example 5 of the thermally bonded structure folded.
FIG. 17 is an enlarged view of part D in FIG. 16.
FIG. 18 is a schematic view of a laminated battery cell with Example 6 of the thermally bonded structure folded.
FIG. 19 is an enlarged view of part E in FIG. 18.
FIG. 20 is an annotated view of a laminated battery cell according to an embodiment of the present disclosure.

### DETAILED DESCRIPTION

The technical solutions in the embodiments of the present application will be clearly and completely described with reference to the accompanying drawings below. It will be apparent that the described embodiments are only part of the examples of the present disclosure, and not all examples. Based on the embodiments in the present disclosure, all other embodiments obtained by a person skilled in the art without involving any creative effort are within the scope of the present disclosure.

Embodiments of the present application provide a method for preparing a laminated battery cell to solve the problems in the prior art of high equipment investment, excessive processing procedures, and poor alignment in shaping and aligning the laminated battery cell through the shaping equipment. The following description will be made in conjunction with the accompanying drawings.

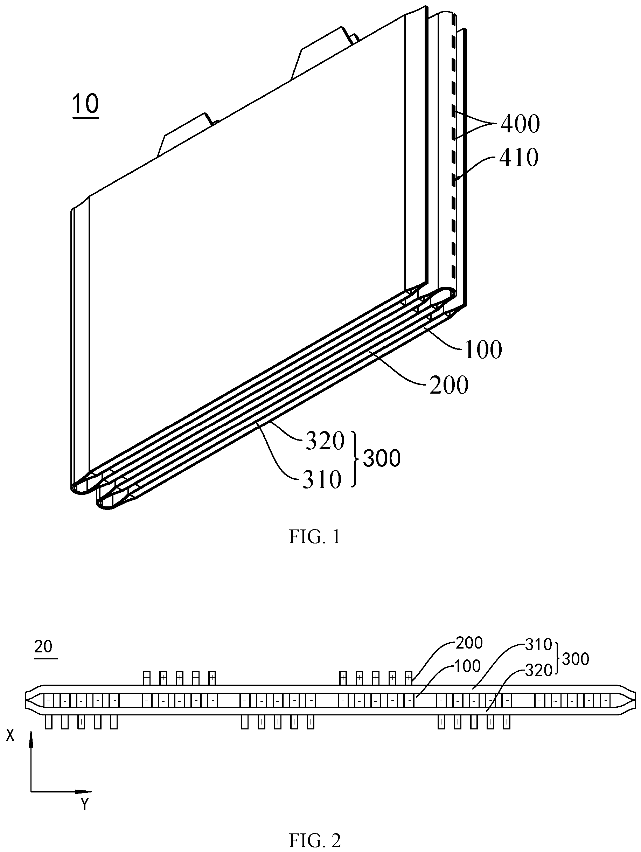

Referring to FIG. 1 to FIG. 3, a method for preparing a laminated battery cell according to an embodiment of the subject application includes steps of:
providing negative electrode sheets 100, positive electrode sheets 200, and a membrane 300;
thermally bonding the negative electrode sheets 100 and the positive electrode sheets 200 to the membrane 300 to form a thermally bonded structure 20;
forming a plurality of folding structures 400 at intervals in the thermally bonded structure 20, with i positive electrode sheets 200 arranged between every two adjacent folding structures 400, where i is a positive integer; and
folding the thermally bonded structure along each straight line where each of the folding structures 400 is located to prepare the laminated battery cell 10. The laminated battery cell 10 may be used as an energy storage unit for a battery. The battery may convert the energy stored in the battery cell into current and supply it to an electronic device for use.

For example, the process of thermal bonding is as follows. A positive electrode material roll, a negative electrode material roll, and a membrane 300 are simultaneously fed. Before entering a heating device, the material rolls are cut into electrode sheets of a desired size by a cutting knife. The combination of the negative electrode sheets 100, the positive electrode sheets 200, and the membrane 300 are fed into the heating device through a roller. The membrane is coated with glue and becomes sticky when heated. The baked membrane 300 is thermally bonded to the positive electrode sheets 200 and the negative electrode sheets 100, and then rolled and cut off to form a thermally bonded structure 20.

It can be understood that in the present embodiment, the negative electrode sheets 100 and the positive electrode sheets 200 are thermally bonded to the membrane 300 to form a thermally bonded structure. The folding structures 400 are formed in the thermally bonded structure 20. The folding structures 400 are located on a side of the positive electrode sheets 200. The thermally bonded structure 20 is folded in a free-fall manner along each straight line where each of the folding structures 400 is located. The folding structures 400 are corresponding to preset creases. The thermally bonded structure 20 is folded along the preset creases to ensure the position for each folding is fixed. Since the distance between every two adjacent folding structures 400 is equal, the alignment of the laminated battery cell is ensured, the subsequent investment and process of the shaping equipment are eliminated, and the processing cost of the laminated battery cell is reduced.

In some embodiments, referring to FIG. 1 to FIG. 3, the thermally bonded structure 20 is folded along each straight line where each of the folding structures 400 is located in a shape of the letter "Z". Compared to wound in a shape of homocentric squares, the thermally bonded structure 20 is folded in a shape of letter "Z", which can reduce material input and lower production costs.

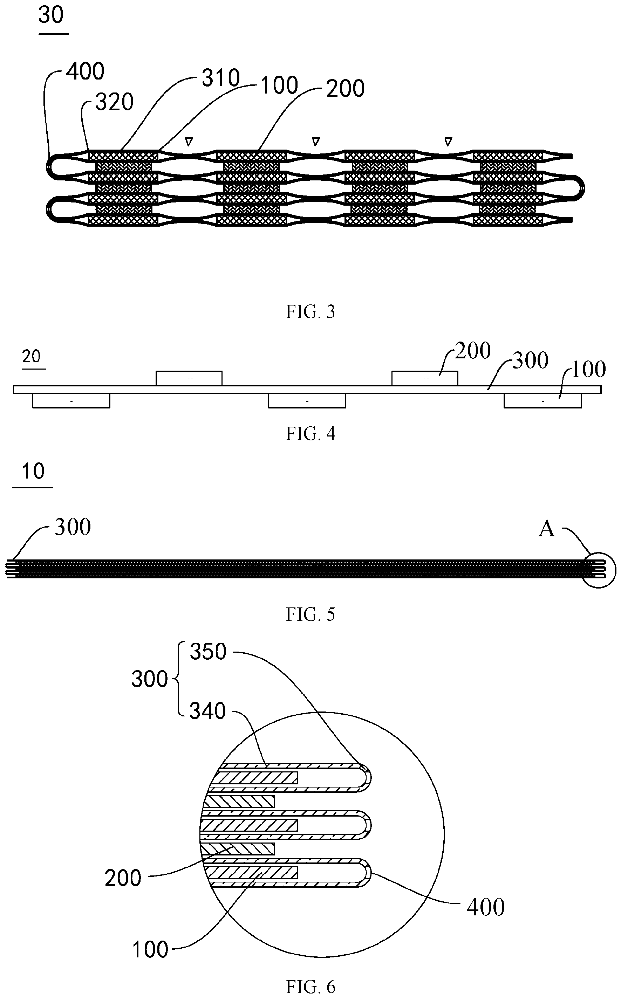

In some embodiments, referring to FIG. 2 and FIG. 3, the method for preparing a laminated battery cell further includes steps of: in case where i is greater than 1, the thermally bonded structure 20 is folded along each straight line where each of the folding structures 400 is located to form a laminated battery cell group 30; and the bonded battery cell group 30 is cut along areas between every two adjacent positive electrode sheets 200 to prepare i laminated battery cells 10.

It can be understood that in this embodiment, a plurality of positive electrode sheets 200 are arranged between every two adjacent folding structures 400. For example, four positive electrode sheets 200 are arranged between every two adjacent folding structures 400, as shown in FIG. 3. A plurality of electrode layers are formed along a thickness direction of the laminated battery cell group 30, and the number of positive electrode sheets 200 in each electrode layer is the same. As shown in FIG. 3, the thermally bonded structure is folded along each of the folding structures 400 to form the laminated battery cell group 30, which corresponds to fold i laminated battery cells at the same time. Thus, the alignment of the electrode sheets in the laminated battery cell group 30 is high. Then, the laminated battery cell group 30 is cut into a plurality of laminated battery cells. Thus, the alignment of the cutting edges is also high, and the alignment of the prepared laminated battery cells is high. Therefore, the processing efficiency of the laminated battery cells is increased, meanwhile the alignment of the laminated battery cells is improved.

In some embodiments, as shown in FIG. 1, in case where i is equal to 1, folding structures 400 are formed between every two adjacent positive electrode sheets 200, and the thermally bonded structure 20 is folded along each of the folding structures 400 to prepare a single laminated battery cell. The folding structures 400 are corresponding to preset creases. The thermally bonded structure 20 is folded along the preset creases to ensure the position for each folding is fixed. Since the distance between every two adjacent folding structures 400 is equal, the alignment of the laminated battery cell is ensured, the subsequent investment and process of the shaping equipment are eliminated, and the processing cost of the laminated battery cell is reduced.

Because the negative electrode sheets 100, the positive electrode sheets 200 and the membrane 300 are different in structure and laminating method, the resulting thermally bonded structures 20 are different, and the specific processing procedures are also different, the resulting laminated battery cells 10 are different in structure. The thermally bonded structures 20 in different forms are described in detail as follows.

Example 1: as shown in FIG. 4, a thermally bonded structure includes a plurality of negative electrode sheets 100 each in a single structure, a plurality of positive electrode sheets 200 each in a single structure, and a membrane 300. The membrane 300 is in a form of a continuous single-layer stripe, and the negative electrode sheets 100 and the positive electrode sheets 200 are both in a shape of rectangle. Negative electrode tabs are arranged on the negative electrode sheets 100, and positive electrode tabs are arranged on the positive electrode sheets 200. The negative electrode sheets 100 are arranged on one side of the membrane 300, and the plurality of negative electrode sheets 100 are arranged at intervals along a length direction Y of the membrane 300. The positive electrode sheets 200 are arranged on another side of the membrane 300, and the plurality of positive electrode sheets 200 are arranged at intervals along the length direction Y of the membrane 300. The i negative electrode sheets 100 and the i positive electrode sheets 200 are alternately arranged along the length direction Y of the membrane 300. Folding structures 400 are formed in the membrane 300. In case where i is equal to 1, one negative electrode sheet 100 and one positive electrode sheet 200 are alternately arranged along the length direction Y of the membrane 300. In case where i is a positive integer greater than 1, every i negative electrode sheets 100 and every i positive electrode sheets 200 are alternately arranged at intervals along the length direction Y of the membrane 300.

The method for preparing Example 1 of the thermally bonded structure includes steps of:
S10, providing a negative electrode material roll, a positive electrode material roll, and a membrane material roll;
S11, cutting off the negative electrode material roll to prepare a plurality of negative electrode sheets 100 each in a single structure, cutting off the positive electrode material roll to prepare a plurality of positive electrode sheets 200 each in a single structure, and cutting off the membrane material roll to prepare a membrane 300; thermally bonding the plurality of negative electrode sheets 100 and the plurality of positive electrode sheets 200 to the membrane 300 to form the above thermally bonded structure 20 as shown in FIG. 4.

In S11, in order to form the thermally bonded structure 20, first all the negative electrode sheets 100 are thermally bonded to the membrane 300, and then all the positive electrode sheets 200 are thermally bonded to the membrane 300.

In S11, the i negative electrode sheets 100 are first thermally bonded to the membrane 300, then the i positive electrode sheets 200 are thermally bonded to the membrane 300, the i negative electrode sheets 100 and the i positive electrode sheets 200 are thermally bonded to the membrane 300 alternately until Example 1 of the thermally bonded structure 20 is prepared.

It can be understood that in S11 of the embodiment, all the needed negative electrode sheets 100 and positive electrode sheets 200 can be cut off and then thermally bonded to the membrane 300. Alternatively, a next electrode sheet may be cut off during the process of thermally bonding a previous electrode sheet to the membrane 300. The detail may be selected according to actual needs, which is not specifically limited thereto.

The above Example 1 of the thermally bonded structure 20 is folded in a shape of letter "Z" to prepare a laminated battery cell 10 as shown in FIG. 5 and FIG. 6.

The structure of the laminated battery cell 10 corresponding to Example 1 is as follows. As shown in FIG. 5 and FIG. 6, the laminated battery cell 10 includes the membrane 300, the negative electrode sheets 100, and the positive electrode sheets 200. The membrane 300 includes a plurality of body portions 340 and a plurality of bending portions 350 that are continuously and alternately arranged. One side of the negative electrode sheets 100 is bonded to one side of the membrane 300, and one side of the positive electrode sheets 200 is bonded to another side of the membrane 300. The positive electrode sheets 200 and the negative electrode sheets 100 are alternately arranged along a thickness direction of the negative electrode sheets 100. Every two adjacent negative electrode sheet 100 and positive electrode sheet 200 are separated by one body portion 340. The folding structures 400 are formed in the bending portions 350.

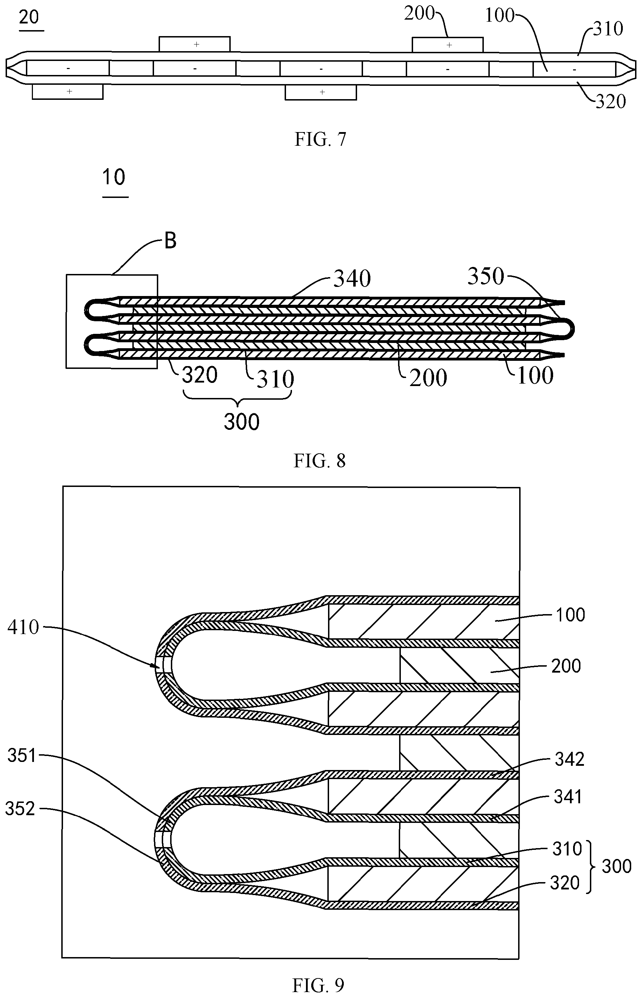

Example 2: Referring to FIG. 2 and FIG. 7, the membrane 300 includes a first membrane 310 and a second membrane 320, each of which is in a form of a continuous strip. The thermally bonded structure 20 includes N negative electrode sheet groups, M positive electrode sheet groups, the first membrane 310, and the second membrane 320. Each negative electrode sheet group includes i negative electrode sheets 100, and each positive electrode sheet group includes i positive electrode sheets 200, N, M, and i are all positive integers, and N - M = 1. The number of the negative electrode sheets 100 is i more than the number of the positive electrode sheets 200. Correspondingly, in each of the laminated battery cells, the number of the negative electrode sheets 100 is 1 more than the number of the positive electrode sheets 200. This ensures that the negative electrode sheets 100 are arranged on the outermost two sides of the laminated battery cell, thereby the electrical requirements for the laminated battery cell are met.

The negative electrode sheet groups are bonded between the first membrane 310 and the second membrane 320. The positive electrode sheet groups are alternately bonded to a side, facing away from the negative electrode sheet groups, of the first membrane 310 and to a side, facing away from the negative electrode sheet groups, of the second membrane 320 in the length direction Y of the thermally bonded structure 20. The entire projection of the positive electrode sheets 200 in the thickness direction falls within the plane area where the negative electrode sheets 100 are located. The folding structures 400 are formed in the first membrane 310 and/or the second membrane 320 between every two adjacent negative electrode sheet groups.

The method for preparing Example 2 of the thermally bonded structure includes steps of:
S20, providing a negative electrode material roll, a positive electrode material roll, and a membrane material roll;
S21, cutting off the negative electrode material roll to prepare negative electrode sheets 100, cutting off the positive electrode material roll to prepare positive electrode sheets 200, and cutting the membrane material roll to prepare a membrane 300, and thermally bonding the negative electrode sheets 100 and the positive electrode sheets 200 to the membrane 300 to form the above thermally bonded structure 20 as shown in FIG. 7.

Specifically, S21 includes the following steps:
S211, sequentially cutting out i negative electrode sheets 100, and sequentially thermally bonding the i negative electrode sheets 100 between the first membrane 310 and the second membrane 320;
S212, sequentially cutting out i positive electrode sheets 200, and sequentially thermally bonding the i positive electrode sheets 200 to a side, facing away from the negative electrode sheets 100, of the first membrane 310 or to a side, facing away from the negative electrode sheets 100, of the second membrane 320;
S113, alternately performing S211 and S212 until the above thermally bonded structure 20 as shown in FIG. 2 and FIG. 7 is prepared.

As a variant, in S21, all the negative electrode sheets 100 are thermally bonding to the first membrane 310 and the second membrane 320, and then all the positive electrode sheets 200 are thermally bonded to the first membrane 310 and the second membrane 320.

The above Example 2 of the thermally bonded structure is folded in a shape of letter "Z" to prepare a laminated battery cell 10 as shown in FIG. 8 and FIG. 9.

The structure of the laminated battery cell 10 corresponding to Example 2 is as follow. As shown in FIG. 8 and FIG. 9, the laminated battery cell 10 includes a plurality of negative electrode sheets 100, a plurality of positive electrode sheets 200, and a membrane 300. The membrane 300 includes a first membrane 310 including a first body portion 341 and a first bending portion 351, and a second membrane 320 including a second body portion 342 and a second bending portion 352. One negative electrode sheets 100 is arranged between any two adjacent first body portion 341 and second body portion 342, and One positive electrode sheets 200 is arranged between any two adjacent first body portions 341, as well as between any two adjacent second body portions 342. The folding structures 400 are formed in the first bending portion 351 and/or the second bending portion 352. Specifically, all folding structures 400 are formed in the first membrane 310. Alternatively, all folding structures 400 are formed in the second membrane 320. Alternatively, some of the folding structures 400 are formed in the first membrane 310, and others are formed on the second membrane 320. Alternatively, the folding structures 400 are formed in both the first membrane 310 and the second membrane 320, and the number and position of the folding structures 400 in the first membrane 310 are the same as the number and position of the folding structures 400 in the second membrane 320.

As shown in FIG. 9, in case that the folding structures 400 are formed in both the first bending portion 351 and the second bending portion 352, the projection of the folding structures 400 in the first membrane 310 onto the second membrane 320 overlaps with the single plane area enclosed by an outer contour of the folding structures 400 in the second membrane 320. During the folding of the membrane 300, both the first membrane 310 and the second membrane 320 are folded along the same straight line to ensure the alignment of the body portions 340 of all layers in the laminated battery cell, and therefore the alignment of the laminated battery cell is improved.

For example, as shown in FIG. 9, the first bending portion 351 and the second bending portion 352 may be bonded to each other. It is considered that the two bending portions are bonded to each other so long as one of the bending portions is in contact with another in some parts. In some other embodiments, the first bending portion 351 and the second bending portion 352 may not be in contact with each other, and this is not limited thereto.

According to the embodiments of the present disclosure, folding structures are formed to define the folding positions of the membrane 300, so that the membrane 300 can be folded at substantively the same positions. Thus, the alignment between the negative electrode sheets 100 and the positive electrode sheets 200 is ensured, and the occurrence of lithium precipitation piercing the membrane 300 due to misalignment of the negative electrode sheets 100 and the positive electrode sheets 200 is avoided. Therefore, the electrical performance of the laminated battery cell is enhanced in terms of service life, fast charging capacity, and safety.

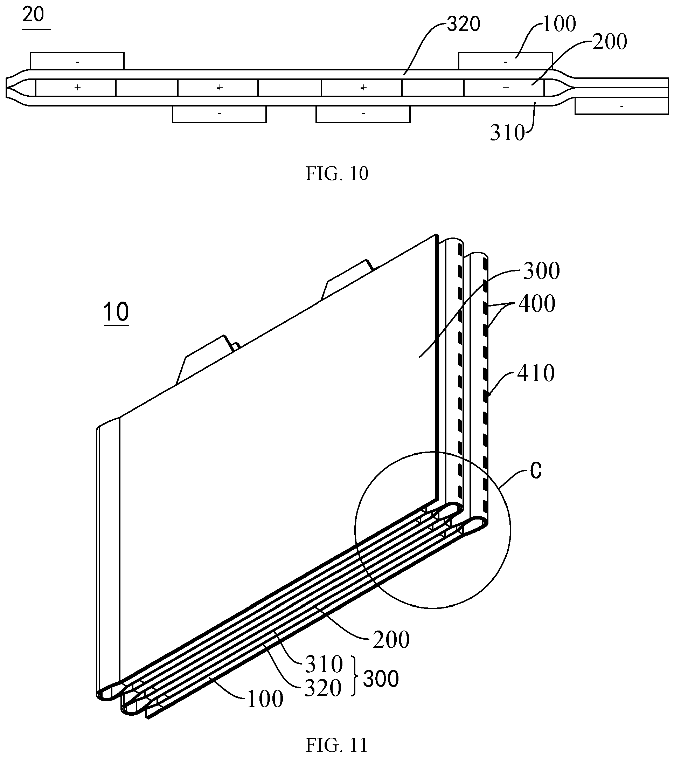

Example 3: as shown in FIG. 10, Example 3 differs from Example 2 in that: the negative electrode sheets 100 in Example 2 are arranged between the first membrane 310 and the second membrane 320, whereas the positive electrode sheets 200 in Example 3 are arranged between the first membrane 310 and the second membrane 320.

The thermally bonded structure 20 includes positive electrode sheet groups, negative electrode sheet groups, a first membrane 310, and a second membrane 320. The positive electrode sheet groups are bonded between the first membrane 310 and the second membrane 320. The negative electrode sheet groups are alternately bonded to a side, facing away from the positive electrode sheets 200, of the first membrane 310 and to a side, facing away from the positive electrode sheets, of the second membrane 320 200 in the length direction Y of the thermally bonded structure 20. The entire projection of the positive electrode sheets 200 in the thickness direction falls within the plane area where the negative electrode sheets 100 are located. The folding structures 400 are formed in the first membrane 310 and/or the second membrane 320 between every two adjacent negative electrode sheet groups.

The method for preparing Example 3 of the thermally bonded structure includes steps of:
S30, providing a negative electrode material roll, a positive electrode material roll, and a membrane material roll;
S31, cutting off the negative electrode material roll to prepare negative electrode sheets 100, cutting off the positive electrode material roll to prepare positive electrode sheets 200, and cutting off the membrane material roll to prepare a membrane 300, and thermally bonding the negative electrode sheets 100 and the positive electrode sheets 200 to the membrane 300 to form the above thermally bonded structure 20.

Specifically, S31 includes the following steps:
S341, sequentially cutting out i negative electrode sheets 100, and sequentially thermally bonding the i negative electrode sheets 100 to a side, facing away from the second membrane 320, of the first membrane 310 or to a side, facing away from the first membrane 310, of the second membrane 320;
S342, sequentially cutting out i positive electrode sheets 200, and sequentially thermally bonding the i positive electrode sheets 200 between the first membrane 310 and the second membrane 320; and
S313, alternately performing S341 and S342 until the above thermally bonded structure 20 as shown in FIG. 10 is prepared.

The structure of the laminated battery cell 10 corresponding to Example 3 of the thermally bonded structure is as follows. A laminated battery cell 10 includes a plurality of negative electrode sheets 100, a plurality of positive electrode sheets 200, and a membrane 300. The battery cell may be used as an energy storage unit for a battery. The battery may convert the energy stored in the battery cell into current and supply it to an electronic device for use.

The negative electrode sheets 100 and the positive electrode sheets 200 are both in a shape of rectangle. Negative electrode tabs can be arranged on the negative electrode sheets 100 and positive electrode tabs are arranged on the positive electrode sheets 200. Both the negative electrode tabs and the positive electrode tabs can be at least partially located arranged outside the membrane 300. The polarity of the negative electrode sheets 100 is opposite to that of the positive electrode sheets 200, the polarity of the negative electrode tabs is the same as that of the negative electrode sheets 100, and the polarity of the positive electrode tabs is the same as that of the positive electrode sheets 200.

A plurality of membrane 300 may be provided, and the plurality of the membranes may be arranged in the thickness direction of the negative electrode sheets 100. For example, the battery cell may include a double-layer membrane, or may include a membrane with more than two layers.

The double-layer membrane 300 includes a first membrane 310 and a second membrane 320, both the first membrane 310 and the second membrane 320 include body portions 340 and bending portions 350. The negative electrode sheets 100 and the positive electrode sheets 200 are alternately laminated in the thickness direction X of the negative electrode sheets 100. Every two adjacent negative electrode sheet 100 and the positive electrode sheet 200 are separated by one body portion 340, and the folding structures 400 are formed in the bending portions 350 of the first membrane 310 and/or the folding structures 400 are formed in the bending portions 350 of the second membrane 320.

A side, facing away from the positive electrode sheets 200, of the outermost negative electrode sheet 100 are arranged between the first membrane 310 and the second membrane 320, so that the outermost negative electrode sheet 100 is prevented from being in contact with the battery case to conduct electricity, and therefore the safety of the battery cell is improved.

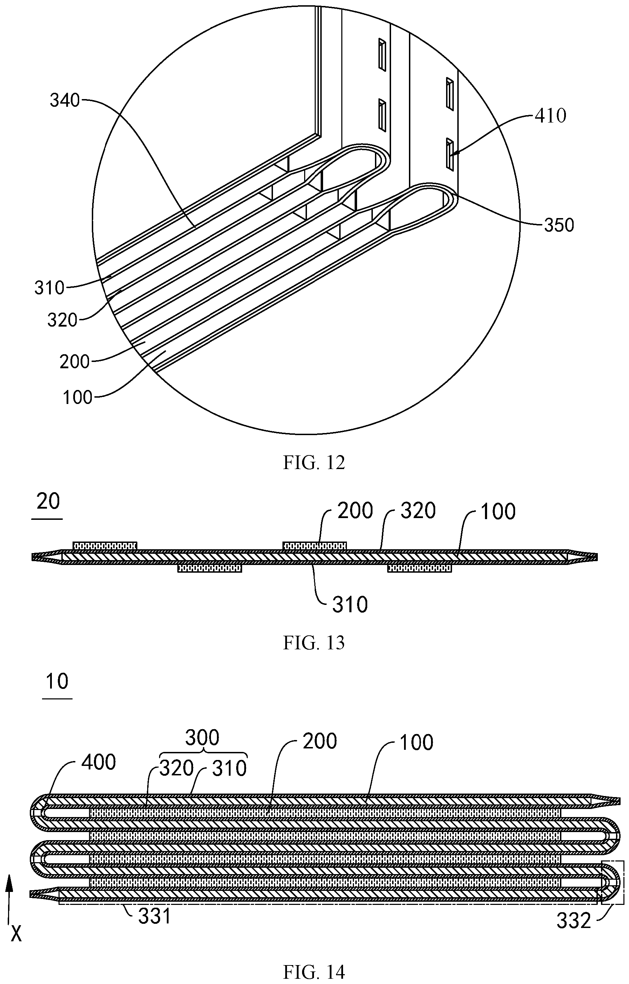

Example 4: referring to FIG. 13, the membrane 300 includes a first membrane 310 and a second membrane 320, and the thermally bonded structure 20 includes a single negative electrode sheet 100, a plurality of positive electrode sheets 200, the first membrane 310, and the second membrane 320. The first membrane 310 and the second membrane 320 are arranged parallel to each other. The negative electrode sheet 100 is thermally bonded to the first membrane 310 and the second membrane 320 and arranged therebetween. The i positive electrode sheets 200 are alternately thermally bonded on a side, facing away from the negative electrode sheet 100, of the first membrane 310 and on a side, facing away from the negative electrode sheet 100, of the second membrane 320.

The method for preparing Example 4 of the thermally bonded structure includes steps of:
S30, providing a negative electrode material roll, a positive electrode material roll, and a membrane material roll;
S31, pulling out a negative electrode sheet 100 from the negative electrode material roll, during the movement, thermally bonding the negative electrode sheet 100 between the first membrane 310 and the second membrane 320, and cutting out the negative electrode material roll until the length of the negative electrode sheet 100 reaches a predetermined value, and cutting off the first membrane material roll and the second membrane material roll until the length of the first membrane 310 and the second membrane 320 reaches a predetermined value;
S32, sequentially cutting off a plurality of positive electrode sheets each in a single structure from the positive electrode material roll, and alternately thermally bonding i positive electrode sheets 200 to a side, facing away from the negative electrode sheet 100, of the first membrane 310 and to a side, facing away from the negative electrode sheet 100, of the second membrane 320, so as to prepare the above thermally bonded structure 20 as shown in FIG. 13.
S33, forming folding structures 400 in the thermally bonded structure 20, wherein the folding structures 400 are formed in the first membrane 310 and/or the second membrane 320 and/or the negative electrode sheet 100.

As a variant, the positive electrode sheets 200 can be thermally bonded simultaneously during the process of thermally bonding the negative electrode sheet 100. The i positive electrode sheets 200 and the folding structures 400 may be alternately processed. Alternatively, all the folding structures 400 may be formed after the thermally bonded structure 20 is completed.

It can be understood that, compared to the other embodiments, the negative electrode sheet 100 in this embodiment is in a single strip-like structure, so that the step of cutting the negative electrode sheet 100 is eliminated, the processing steps of the laminated battery cell is reduced, and the processing efficiency is increased.

The above Example 4 of the thermally bonded structure is folded in a shape of letter "Z" to prepare a laminated battery cell 10 as shown in FIG. 14.

The structure of the laminated battery cell 10 corresponding to Example 4 is as follows. As shown in FIG. 14, the laminated battery cell 10 includes a single negative electrode sheet 100, a plurality of positive electrode sheets 200, and a membrane 300.

The membrane 300 includes a first membrane 310 and a second membrane 320. Before folded, the first membrane 310 and the second membrane 320 are in a single strip-like structure. The first membrane 310 and the second membrane 320 have the same size and shape. The shape of the negative electrode sheet 100 is the same as that of the first membrane 310 and the second membrane 320, and the size of the first membrane 310 or the second membrane 320 is larger than that of the negative electrode sheet 100. The negative electrode sheet 100 is arranged between the first membrane 310 and the second membrane 320. The first membrane 310, the negative electrode sheet 100, and the second membrane 320 are laminated to form a bonded laminate. The bonded laminate is folded to form a plurality of horizontal portions 331 and a plurality of connecting portions 332, and every two adjacent horizontal portions 331 are connected by one connecting portion 332. The folding structures 400 are formed in the connecting portions 332. The positive electrode sheets 200 and the horizontal portions 331 are alternately arranged along the thickness direction X. Each of the positive electrode sheets 200 is arranged between every two adjacent horizontal portions 331. The entire projection of the positive electrode sheets 200 in the thickness direction falls within the plane area of the horizontal portions 331. The plane area of the horizontal portions 331 is a single plane area enclosed by an outer contour of the horizontal portions 331 projected in the thickness direction of the positive electrode sheets 200. The membrane 300 may be made of polypropylene, polyethylene, polyethylene terephthalate, polybutylene terephthalate, ethylene-propylene copolymer, cellulose, or the like.

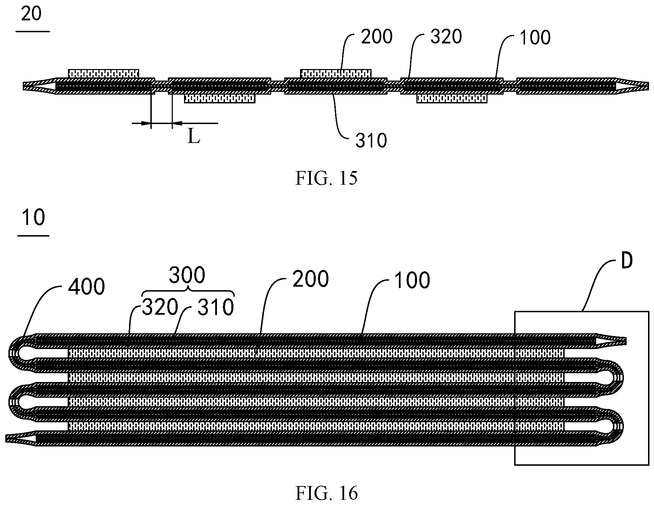

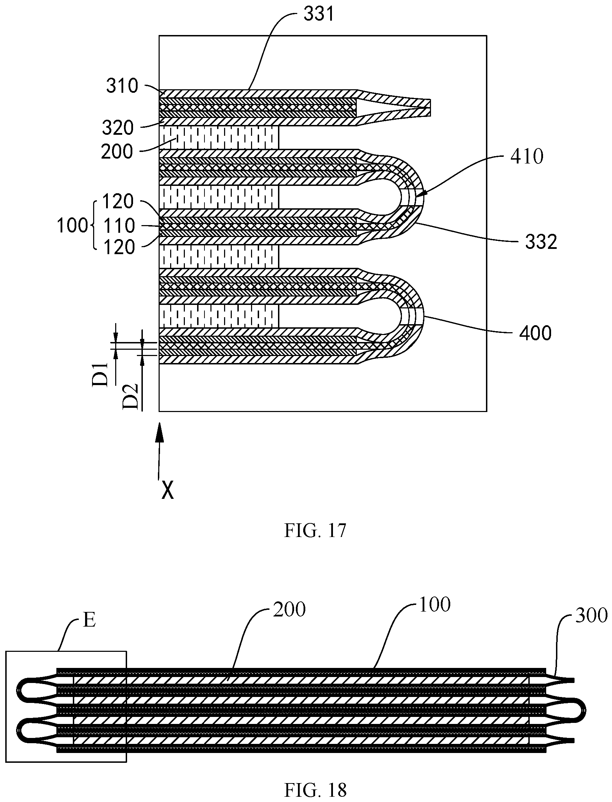

Example 5: as shown in FIG. 15 and FIG. 17, on the basis of the above-mentioned Example 4, a negative electrode sheet 100 includes a single negative electrode current collector 110 and a plurality of negative electrode active layers 120. The negative electrode active layers 120 are arranged on both sides of the negative electrode current collector 110. The negative electrode active layers 120 are arranged opposite to the positive electrode sheets 200. The projection of the positive electrode sheets 200 in the thickness direction falls within the plane area of the negative electrode active layers 120.

All the negative electrode active layers 120 may be etched on the single negative electrode sheet 100, and then the negative electrode sheet 100 is thermally bonded to the first membrane 310 and the second membrane 320. Alternatively, the negative electrode active material on the negative electrode sheet 100 may be etched off during the process of the thermal bonding the negative electrode sheet 100 to the first membrane 310 and the second membrane 320.

In some embodiments, the negative current collector 110 located between every two adjacent negative electrode active layers 120 is bonded to the first membrane 310 and the second membrane 320.

In this embodiment, the area between every two adjacent negative electrode active layers 120 corresponds to the area where the negative electrode sheet 100 is folded. Therefore, the occurrence of short circuits of the laminated battery cell caused by falling of powder during the folding is reduced, and the reliability of the laminated battery cell is improved.

The above Example 5 of the thermally bonded structure 20 is folded in a shape of letter "Z" to prepare a laminated battery cell 10 as shown in FIG. 16 and FIG. 17.

The structure of the laminated battery cell 10 corresponding to Example 5 is as follows. As shown in FIG. 16 and FIG. 17, the laminated battery cell 10 includes a negative electrode sheet 100, a plurality of positive electrode sheets 200, and a membrane 300. The negative electrode sheet 100 includes a negative electrode current collector 110 and a plurality of negative electrode active layers 120 arranged at intervals on both sides of the negative electrode current collector 110. The membrane 300 includes a first membrane 310 and a second membrane 320. The negative electrode sheet 100 is thermally bonded between the first membrane 310 and the second membrane 320. The negative electrode sheet 100 and the membrane 300 are formed into a bonded laminate, and the bonded laminate is folded to form a plurality of horizontal portions 331 and a plurality of connecting portions 332, every two adjacent horizontal portions 331 are connected by one connecting portion. The folding structures 400 are formed in the connecting portions 332. The positive electrode sheets 200 and the horizontal portions 331 are alternately arranged along the thickness direction X. Each of the positive electrode sheets 200 is arranged between every two adjacent horizontal portions 331. The entire projection of the positive electrode sheets 200 in the thickness direction X falls within the plane area of the horizontal portions 331. The negative electrode sheet 100 at the horizontal portions 331 includes a negative electrode current collector 110 and negative electrode active layers 120. The negative electrode active layers 120 are arranged on both sides of the negative electrode current collector 110. The entire projection of the positive electrode sheets 200 in the thickness direction X falls within the plane area of the negative electrode active layers 120. The connecting portions 332 correspond to the negative electrode current collector 110 without being covered by the negative electrode active layers 120.

In this embodiment, the negative electrode sheet 100 includes a single negative electrode current collector 110 and a plurality of negative electrode active layers 120 in a form of a single structure. The size of the negative electrode current collector 110 is smaller than that of the membrane 300, but is larger than the sum of the size of at least two positive electrode sheets 200. The size of the negative electrode active layers 120 are larger than that of the positive electrode sheets 200. The negative electrode active layers 120 correspond to the positive electrode sheets 200. A part of the negative electrode current collector 110 that is not in contact with the negative electrode active layers 120 corresponds to the bending area, and the negative electrode active layers 120 are not arranged in this area, so that the occurrence of short circuits of the laminated battery cell caused by powder loss during the folding is reduced, and the reliability of the laminated battery cell is improved.

In some embodiments, the negative electrode active material on the negative electrode sheet 100 is etched off by laser to form a plurality of negative electrode active layers 120. The negative electrode sheet 100 is etched off by laser, the etching effect is good, the operation is simple, and the etching operation can be performed during the movement of the negative electrode sheet 100, so that the processing time is decreased, and the processing efficiency is increased.

In some embodiments, the distance between every two adjacent negative electrode active layers 120 is equal.

It can be understood that the negative electrode active material is etched off by laser to form a plurality of negative electrode active layers 120, and the distance between every two adjacent negative electrode active layers 120 is equal, which facilitates the processing.

In some embodiments, as shown in FIG. 15, the distance between every two adjacent negative electrode active layers 120 is L, where 1 mm ≤ L ≤ 3 mm. L can be set to be 1 mm, 1.3 mm, 1.8 mm, 2.5 mm, 2.7 mm, 3 mm or other values not listed.

In this embodiment, the distance between every two adjacent negative electrode active layers 120 is reasonably designed, so that the occurrence of falling of powder during the process of folding or cutting due to excessive negative electrode active materials in the bending area or the cutting area is avoided, and it is ensured that the positive electrode sheets 200 are covered by the negative electrode active layers 120, thereby the performance of the laminated battery cell is ensured.

In some embodiments, referring to FIG. 16, the negative electrode current collector 110 has a thickness of D1, 4 µm ≤ D1 ≤ 6 µm. D1 may be set to be 4 µm, 4.3 µm, 5 µm, 5.2 µm, 6 µm, or other values not listed. The thickness of the negative current collector 110 is specifically designed to meet the electrical requirements of the negative electrode sheet 100.

In some embodiments, as shown in FIG. 16, the thickness of the negative electrode active layers 120 is D2, 50 µm ≤ D2 ≤ 200 µm. D2 may be set to be 50 µm, 65 µm, 74 µm, 81 µm, 98 µm, 105 µm, 111 µm, 127 µm, 133 µm, 147 µm, 155 µm, 164 µm, 178 µm, 183 µm, 196 µm, 200 µm, or other values not listed. The thickness of the negative electrode active layers 120 is reasonably designed to meet the electrical requirements of the negative electrode sheet 100.

Example 6: The thermally bonded structure 20 includes n double-sided negative electrode sheet groups, M positive electrode sheet groups, a first membrane 310, and a second membrane 320. Each double-sided negative electrode sheet group includes i double-sided negative electrode sheets 100B. Each positive electrode sheet group includes i positive electrode sheets, n and M are positive integers, and M - n = 1. The positive electrode sheet groups are arranged between the first membrane 310 and the second membrane 320. The positive electrode sheet groups are alternately arranged with the double-sided negative electrode sheets along the length direction Y of the thermally bonded structure 20. The double-sided negative electrode sheet groups are thermally bonded to a side, facing away from the positive electrode sheet groups, of the first membrane 310 and a side, facing away from the positive electrode sheet groups, of the second membrane 320. The projection of the positive electrode sheets 200 in the thickness direction falls within the plane area where the double-sided negative electrode sheets 100B are located. The folding structures 400 are formed in the first membrane 310 and/or the second membrane 320 between every two adjacent double-sided negative electrode sheet groups.

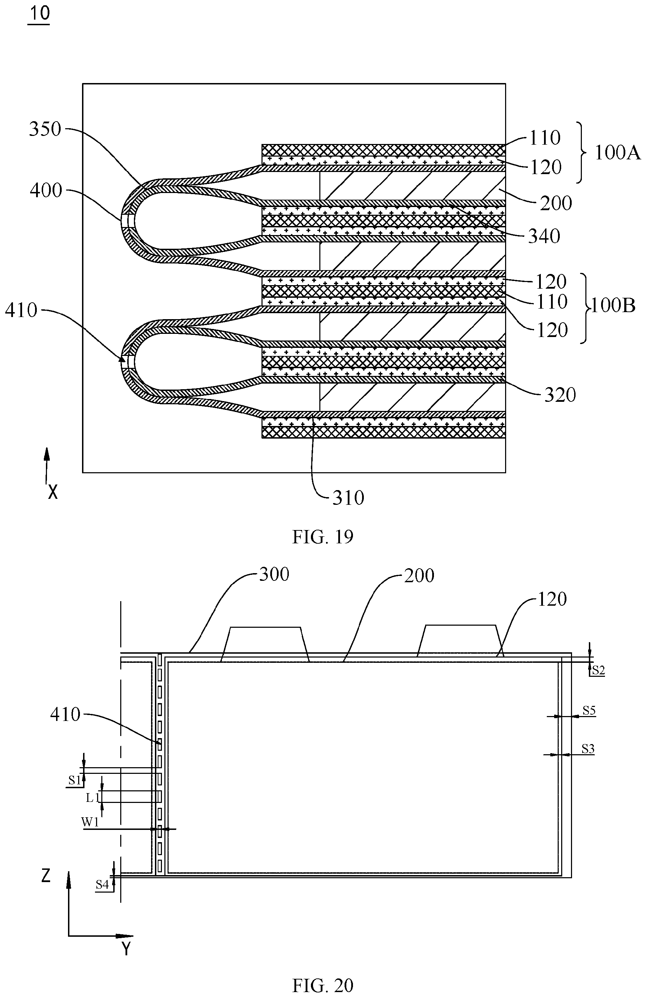

For example, referring to FIG. 19, each double-sided negative electrode sheet 100B includes a negative electrode current collector 110 and negative electrode active layers 120, and the negative electrode active layers 120 are arranged on both sides of the negative electrode current collector 110.

Correspondingly, the method for preparing the laminated battery cell further includes steps of:
providing two single-sided electrode groups each including i single-sided negative electrode sheets 100A;
folding the thermally bonded structure along each straight line where each of the folding structures 400 is located, and then thermally bonding the single-sided electrode sheet groups on the outermost sides of the folded thermally bonded structure, respectively to prepare the laminated battery cell 10 as shown in FIG. 18 and FIG. 19.

For example, as shown in FIG. 19, each single-sided negative electrode sheet 100A includes a negative electrode current collector 110 and negative electrode active layers 120, and the negative electrode active layers 120 are arranged on both sides of negative electrode current collector 110.

The structure of the laminated battery cell 10 prepared by Example 6 of the thermally bonded structure 20 is as follows.

The laminated battery cell 10 includes negative electrode sheets 100, positive electrode sheets 200, and a membrane 300. The membrane 300 includes a plurality of body portions 340 and a plurality of bending portions 350 that are arranged alternately and continuously. The plurality of body portions 340 are laminated along the thickness direction X of the negative electrode sheets 100. Every two adjacent body portions 340 are connected by one bending portion 350. The folding structures 400 are formed in the bending portions 350, and the membrane 300 are bent at the folding structures 400. In the thickness direction X of the negative electrode sheets 100, the negative electrode sheets 100 and the positive electrode sheets 200 are alternately laminated. Each positive electrode sheet 200 is positioned between every two adjacent negative electrode sheets 100, and every two adjacent negative electrode sheet 100 and positive electrode sheet 200 are separated by one body portion 340. The two outermost negative electrode sheets 100 are single-sided negative electrode sheets 100A, and other negative electrode sheets 100 are double-sided negative electrode sheets 100B. The entire projections of the positive electrode sheets 200 and the negative electrode sheets 100 in the thickness direction of the negative electrode sheets 100 fall within the plane area of the body portions 340 between the positive electrode sheets 200 and the negative electrode sheets 100, so that the negative electrode sheets 100 can be completely separated from the positive electrode sheets 200 by the body portions 340. Therefore, short circuits caused by contact between the positive electrode sheets 200 and the negative electrode sheets 100 is prevented. The plane area of the body portions 340 is a single plane area enclosed by an outer contour of the body portions 340 projected in the thickness direction of the negative electrode sheets 100.

It will be appreciated that, before folded, the membrane 300 is in a single strip-like shape. The negative electrode sheets 100 and the positive electrode sheets 200 are bonded with the body portions 340 of the membrane 300 to form a bonded laminate. The folding structures 400 are formed in the membrane 300, and the distance between each of both sides of the folding structures 400 and the negative electrode sheets 100 on the side where the folding structures 400 are located is equal or substantially equal. The bonded laminate layer is folded along each straight line where each of the folding structures 400 is located. The folding positions are fixed, the alignment during the process of folding is improved, the occurrence of lithium precipitation piercing the membrane 300 due to misalignment of the negative electrode sheets 100 and the positive electrode sheets 200 is avoided, and the electrical performance of the laminated battery cell is improved. The outermost negative electrode sheets 100 are provided as single-sided negative electrode sheets 100A, thus no active material layer is arranged at the outermost side of the single-sided negative electrode sheets 100A, so that the material input and the cost are reduced.

In this embodiment, two types of negative electrode sheets 100 are provided. The double-sided negative electrode sheets 100B is thermally bonded with the first membrane 310, the second membrane 320, and the positive electrode sheets 200 to form the thermally bonded structure 20. The thermally bonded structure 20 is folded, and the single-sided negative electrode sheets 100A are bonded to the outermost sides of the folded thermally bonded structure 20, and the negative electrode active layers 120 of the single-sided negative electrode sheets 100A are bonded to the membrane 300. No film is arranged on the outer sides of the outermost negative electrode sheets 100, so that the membrane material used and the cost is reduced.

In some embodiments, referring to FIG. 1 and FIG. 20, the folding structures 400 include a plurality of through holes 410 arranged at intervals in the width direction Z of the thermally bonded structure.

The plurality of through holes 410 are arranged in an array. The plurality through holes 410 are arranged in a plurality of rows in the longitudinal direction Y of the membrane 300. Each row of through holes 410 may be arranged along the width direction ZZ of the membrane 300. For example, the arrangement direction of the plurality of rows of through holes 410 may be parallel to each other. In other embodiments, there may be an included angle between the arrangement direction of at least one row of through holes 410 and the arrangement direction of the other rows of through holes 410. For example, the included angle may be less than or equal to 10°, for example, 1°, 2°, or 5°. In some other embodiments, the included angle may be greater than 10°, which is not limited thereto. For example, a plurality of through holes 410 in one of any two rows of through holes 410 may be arranged one-by-one opposite to a plurality of through holes 410 in another row. In some other embodiments, at least one row of a plurality of through holes 410 may be arranged to be staggered with the other rows of a plurality of through holes 410. The staggered arrangement of two through holes means that the projection of one through hole 410 in the longitudinal direction Y of the membrane 300 does not overlap with the projection of another through hole. For example, the plurality of through holes 410 in one of the adjacent two rows of through holes may be arranged to be staggered with the plurality of through holes 410 in another row.

In some other embodiments, the folding structures 400 may also include a plurality of slots arranged at intervals. The slots may be prepared by cutting the membrane with a cutter or the like. The folding structures 400 may also be in a form of a mesh structure.

It will be appreciated that in case that the membrane 300 is a single-layer membrane, the negative electrode sheets 100 and the positive electrode sheets 200 are separated electrode sheets, the folding structures 400 are through holes 410 penetrating through the single-layer membrane, and portions of the membrane between every two adjacent through holes 410 are still in a connected state. In case that the membrane 300 is a double-layer membrane, and the negative electrode sheets 100 and the positive electrode sheets 200 are separated electrode sheets, the folding structures 400 are through holes penetrating through the first membrane 310 and/or the second membrane 320.

Some materials of the membrane 300 are cut off to form the through holes 410. In the width direction Z of the membrane 300, not all materials of the membrane 300 are cut off. Compared to all materials of the membrane 300 are cut off, the shrinking and wrinkling of the membrane due to disconnection is avoided. Moreover, the membrane 300 around the through holes 410 is weak, so that the membrane 300 is folded along the positions of the through holes 410 during folded in a free-fall manner. Therefore, folding at accurate positions is realized, and the alignment between the negative electrode sheets 100 and the positive electrode sheets 200 in the laminated battery cell is facilitated.

In some embodiments, referring to FIG. 14 and FIG. 17, the folding structures 400 include a plurality of through holes 410 penetrating through the membrane 300 and the negative electrode sheets 100. The plurality of through holes 410 are arranged at intervals in the width direction Z of the thermally bonded structure.

It will be appreciated that in case where the membrane 300 includes the first membrane 310 and the second membrane 320, and the negative electrode sheet 100 is a single electrode sheet, the through holes 410 of the folding structures 400 penetrate through the first membrane 310, the second membrane 320, and the negative electrode sheet 100. The first membrane 310 and the second membrane 320 around the through holes 410 are bonded with the negative electrode sheet 100 around the through holes 410, so that the entire negative electrode sheet 100 around the through holes 410 is covered, thereby the occurrence of electricity leakage or short circuits is avoided, and the reliability of the battery cell is improved. In addition, the through holes 410 penetrate through the first membrane 310, the second membrane 320, and the negative electrode sheet 100, the folding resistance of the first membrane 310, the second membrane 320, and the negative electrode sheet 100 at these positions are reduced, thereby facilitating the folding of the first membrane 310, the second membrane 320 and the negative electrode sheet 100. Therefore, folding at fixed positions is achieved, and the alignment of the laminated battery cell is improved.

In some embodiments, as shown in FIG. 1 and FIG. 20, the interval between every two adjacent through holes 410 is equal. The interval between every two adjacent through holes 410 refers to the distance between one side of one through hole 410 and one side of the adjacent through hole 410 along the width direction Z of the membrane 300.

In this embodiment, the interval between every two adjacent through holes 410 is equal, so that the forming of the through holes 410 in the membrane 300 and the negative electrode sheet 100 is facilitated, the strength of the membrane 300 is equal to that of the negative electrode sheet 100 on the straight line where the plurality of through holes 410 are located, and the membrane 300 and the negative electrode sheets 100 are prevented from broken during the process of folding due to weak local strength.

In some embodiments, as shown in FIG. 20, the intervals between every two adjacent through holes 410 in the width direction Z of the thermally bonded structure is S1, where 5 mm ≤ S1 ≤ 20 mm. The value of S1 may be 5.0 mm, 5.2 mm, 5.7 mm, 7.8 mm, 9.0 mm, 10.5 mm, 11.5 mm, 12.3 mm, 13.9 mm, 14.0 mm, 15.7 mm, 16.1 mm, 17.4 mm, 18.0 mm, 19.6 mm, 20.0 mm, or other values not listed.

It will be appreciated that the distance between the through holes 410 in this embodiment is reasonably designed, so that the reduction of the structural strength of the membrane 300 and the negative electrode sheets 100 due to the small distance between the through holes 410 and the large number of the through holes 410 is avoided, and the failure of folding at fixed positions during the process of folding due to the large distance between the through holes 410 and the small number of the through holes 410 is avoided.

In some embodiments, the through holes 410 are in a shape of circle, rectangle, or in an irregular shape. The through holes 410 may in a regular shape, such as in a shape of ellipse, hexagon, and octagon, in addition to circle or rectangle.

In some embodiments, referring to FIG. 20, the through holes 410 have a first dimension L1 and a second dimension W1. The first dimension is a distance between two parallel virtual planes abutting against both sides of walls of the through holes 410, and the second dimension is a distance between two parallel virtual planes abutting against both ends of walls of the through holes 410, wherein 1 mm ≤ L1 ≤ 20 mm, and/or 1 mm ≤ W1 ≤ 2 mm. Both sides of walls refer to side walls extending in the width direction ZZ of the membrane 300, and both ends of walls refer to side walls extending in the length direction Y of the membrane 300. The value of L1 in this embodiment may be 1.1 mm, 1.2 mm, 1.5 mm, 2.3 mm, 3.4 mm, 4.2 mm, 5.0 mm, 6.8 mm, 7.8 mm, 8.8 mm, 9.0 mm, 10.3 mm, 11.1 mm, 12.5 mm, 13.8 mm, 14.1 mm, 15.0 mm, 16.6 mm, 17.7 mm, 18.2 mm, 19.1 mm, 20.0 mm, or other values not listed. The value of W1 in this embodiment may be 1.1 mm, 1.2 mm, 1.4 mm, 1.5 mm, 1.8 mm, 2.0 mm, or other values not listed.

It should be noted that the two parallel virtual planes abutting against through holes 410are introduced only for ease of understanding the first dimension and the second dimension, and are not actually present in the solution of the present disclosure. For example, the through holes 410 have an outer profile in a shape of rectangle. In order to determine a first dimension and a second dimension, it is assumed that there are two plane groups, each plane group includes two spaced parallel planes, the two parallel planes in each group are capable of co-acting virtually against the two opposing hole walls of the through holes 410. Thus, there is a distance between the two parallel planes in each group, the first dimension is the distance between the two parallel planes virtually abutting the walls on both sides of the through holes 410, and the second dimension is the distance between the two parallel planes abutting the walls on both ends of the through holes 410.

It will be appreciated that the size of the through holes 410 in this embodiment is reasonably designed, so that the through holes 410 with the excessive large or small length and width are avoided, and the impacts on the structural strength of the membrane 300 and the negative electrode sheets 100 due to the through holes 410 with excessive large size is avoided, or the failure of folding at fixed positions during the process of folding due to the through holes 410 with the excessive small size is avoided.

In some embodiments, referring to FIG. 1, FIG. 6, FIG. 9, FIG. 12, FIG. 14, and FIG. 17, the length dimension of the membrane 300 is greater than the length dimension of the negative electrode sheet 100, and the width dimension of the membrane 300 is greater than the width dimension of the negative electrode sheet 100.

It will be understood that whether the negative electrode sheet 100 is provided as a single electrode sheet or separated electrode sheets, the entire projection of the negative electrode sheets 100 on the membrane 300 falls within the range of the membrane 300. The negative electrode sheets 100 and the positive electrode sheets 200 are separated by the membrane 300, so that the electric safety requirement of the laminated battery cell is met, and the reliability of the laminated battery cell is increased.

In some embodiments, referring to FIG. 20, the distance between the long side of the negative electrode sheet 100 and the side of the membrane 300 is S4. The membrane 300 includes a starting end and a terminating end. The distance between the starting end of the membrane 300 and the wide side of the negative electrode sheet 100 near the starting end is S5, where 2 mm ≤ S4 ≤ 4 mm, 1 mm ≤ S5 ≤ 3 mm. On the outside, the distance between the terminating end of the membrane 300 and the wide edge of the negative electrode sheets 100 near the terminating end is equal to S5.

In this embodiment, S4 may be set to be 2.1 mm, 2.3 mm, 2.4 mm, 2.5 mm, 2.6 mm, 2.7 mm, 2.9 mm, 3 mm, 3.2 mm, 3.3 mm, 3.5 mm, 3.7 mm, 3.8 mm, 3.9 mm, 4 mm, or other values not listed.

In this embodiment, S5 may be set to be 1.1 mm, 1.2 mm, 1.4 mm, 1.5 mm, 1.7 mm, 1.8 mm, 2 mm, 2.1 mm, 2.2 mm, 2.3 mm, 2.5 mm, 2.6 mm, 2.8 mm, 2.9 mm, 3 mm, or other values not listed.

In the present embodiment, S4 may be equal or unequal to S5, which is not limited thereto.

It will be appreciated that the dimensions of the negative electrode sheet 100 and the membrane 300 are reasonably designed, so that when the electrical safety is satisfied, a waste of material due to oversize of the membrane 300 is avoided, and the processing cost is reduced.

In some embodiments, referring to FIG. 1, FIG. 6, FIG. 9, FIG. 12, FIG. 14, and FIG. 17, the length dimension of the negative electrode sheet 100 is greater than the length dimension of the positive electrode sheet 200, and the width dimension of the negative electrode sheet 100 is greater than the width dimension of the positive electrode sheet 200. In the thickness direction of the negative electrode sheet 100, the entire projection of the positive electrode sheet 200 falls within the range of the negative electrode sheet 100.

It will be appreciated that the size of the negative electrode sheet 100 is designed to be larger than the size of the positive electrode sheet 200. During the charging process of the lithium battery, all the lithium ions from the positive electrode sheets 200 can be received by the negative electrode sheets 100, without lithium dendrites formed, so that the thermal runaway caused by short circuits due to the piercing of the membrane 300 by the lithium dendrites formed is avoided, and the reliability of the battery is improved.

In some embodiments, as shown in FIG. 1, FIG. 6, FIG. 9, FIG. 17, and FIG. 20, the positive electrode sheet 200 and the negative electrode sheet 100 are each a single electrode sheet. The distance between the long side of the positive electrode sheet 200 and the long side of the negative electrode sheet 100 is S2, and the distance between the wide side of the positive electrode sheet 200 and the wide side of the negative electrode sheet 100 is S3, where 1 mm ≤ S2 ≤ 3 mm and 1 mm ≤ S3 ≤ 3 mm, and S2 and S3 may be set to be 1 mm, 1.3 mm, 2 mm, 2.6 mm, 3 mm or other values not listed.

The distance S2 between the long side of the positive electrode sheet 200 and the long side of the negative electrode sheet 100 may be equal or unequal to the distance S3 between the wide side of the positive electrode sheet 200 and the wide side of the negative electrode sheet 100, and this embodiment is not limited thereto.

It should be appreciated that, in this embodiment, the distance S2 between the long side of the positive electrode sheet 200 and the long side of the negative electrode sheet 100, as well as the distance S3 between the wide side of the positive electrode sheet 200 and the wide side of the negative electrode sheet 100 are reasonably designed, so that the material waste caused by oversize is avoided, and the cost is reduced, meanwhile the safety performance of the battery is satisfied.

In the above-mentioned embodiments, the description of each embodiment has its own emphasis, and parts not described in detail in a certain embodiment may be referred to the related description of other embodiments.

In the description of this disclosure, the terms "first" and "second" are used for descriptive purposes only and are not to be construed as indicating or implying relative importance or implying the number of indicated technical features. Therefore, the features limited by "first" and "second" may explicitly or implicitly include one or more features.

The method for preparing the laminated battery cell provided in the embodiments of the present application is described in detail above, and the principles and embodiments of the present application are described herein using specific examples. The description of the above embodiments is merely provided to help understand the method of the present application and the battery cell idea thereof. At the same time, variations will occur to those skilled in the art in both the detailed description and the scope of application in accordance with the teachings of the present disclosure. In summary, the present description should not be construed as limiting the disclosure.

## Claims

1. A method for preparing a laminated battery cell, **characterized in that** the method comprises steps of:
providing a negative electrode sheet (100), a plurality of positive electrode sheets (200), and a membrane (300);
thermally bonding the negative electrode sheet (100) and the plurality of positive electrode sheets (200) to the membrane (300) in such a way that the negative electrode sheet (100) is arranged on one side of the membrane (300), and the plurality of positive electrode sheets (200) are arranged at intervals on another side of the membrane (300) to form a thermally bonded structure (20);
forming a plurality of folding structures (400) in the thermally bonded structure (20), wherein a distance between every two adjacent folding structures (400) is equal, i positive electrode sheets (200) are arranged between every two adjacent folding structure (400), and i is a positive integer; and
folding the thermally bonded structure (20) along each straight line where each of the folding structures (400) is located to prepare the laminated battery cell (10).

2. The method for preparing a laminated battery cell according to claim 1, wherein the thermally bonded structure is folded in a shape of letter "Z" along the folding structures (400).

3. The method for preparing a laminated battery cell according to claim 1 or 2, further comprising steps of:
in case where i is greater than 1, folding the thermally bonded structure (20) along each straight line where each of the folding structures (400) is located to form a bonded electrical battery cell group (30); and
cutting the bonded electrical battery cell group (30) along each area between every two adjacent positive electrode sheets (200) to prepare i laminated battery cells (10).

4. The method for preparing a laminated battery cell according to any one of claims 1 to 3, wherein the thermally bonded structure (20) comprises a plurality of negative electrode sheets (100), a plurality of positive electrode sheets (200), and a membrane (300), the negative electrode sheets (100) are arranged at intervals on one side of the membrane (300), and the positive electrode sheets (200) are arranged at intervals on another side of the membrane (300),
wherein i negative electrode sheets (100) and i positive electrode sheets (200) are arranged alternately along a length direction of the membrane (300), and each of the folding structures (400) is formed in the membrane (300) between every two adjacent negative electrode sheet (100) and positive electrode sheet (200).

5. The method for preparing a laminated battery cell according to any one of claims 1 to 4, wherein the thermally bonded structure (20) comprises N negative electrode sheet groups, M positive electrode sheet groups, a first membrane (310), and a second membrane (320),
wherein each of the negative electrode sheet groups comprises i negative electrode sheets (100), and each of the positive electrode sheet groups comprises i positive electrode sheets (200), where N, M and i are all positive integers, and N - M = 1;
wherein the first membrane (310) and the second membrane (320) are bonded between every two adjacent negative electrode sheets (100).

6. The method for preparing a laminated battery cell according to claim 5, wherein the negative electrode sheet groups are bonded between the first membrane (310) and the second membrane (320), and the positive electrode sheet groups are alternately bonded to a side, facing away from the negative electrode sheet groups, of the first membrane (310) and to a side, facing away from the negative electrode sheet groups, of the second membrane (320) in a length direction of the thermally bonded structure (20),
wherein an entire projection of the positive electrode sheets (200) in a thickness direction of the thermally bonded structure (20) falls within a plane area in which the negative electrode sheets (100) are located, and the folding structures (400) are formed in the first membrane (310) and/or the second membrane (320) between every two adjacent negative electrode sheet groups.

7. The method for preparing a laminated battery cell according to claim 5, wherein the positive electrode sheet groups are bonded between the first membrane (310) and the second membrane (320), and the negative electrode sheet groups are alternately bonded to a side, facing away from the positive electrode sheets (200), of the first membrane (310) and to a side, facing away from the positive electrode sheets (200), of the second membrane (320) in a length direction of the thermally bonded structure (20), and an entire projection of the positive electrode sheets (200) in a thickness direction of the thermally bonded structure (20) falls within a plane area in which the negative electrode sheets (100) are located, and the folding structures (400) are formed in the first membrane (310) and/or the second membrane (320) between every two adjacent negative electrode sheet groups.

8. The method for preparing a laminated battery cell according to any one of claims 1 to 7, wherein the thermally bonded structure (20) comprises a single negative electrode sheet (100), a plurality of positive electrode sheet groups, a first membrane (310), and a second membrane (320),
wherein the positive electrode sheet groups comprise i positive electrode sheets (200), the negative electrode sheet (100) is thermally bonded between the first membrane (310) and the second membrane (320), the positive electrode sheet groups are alternately thermally bonded to a side, facing away from the negative electrode sheet (100), of the first membrane (310) and to a side, facing away from the negative electrode sheet (100), of the second membrane (320) along a length direction of the thermally bonded structure (20),
wherein an entire projection of the positive electrode sheets (200) in a thickness direction of the thermally bonded structure (20) falls within the plane area in which the negative electrode sheet (100) is located, the folding structures (400) are formed in the first membrane (310) and/or the second membrane (320) and/or the negative electrode sheet (100) between every two adjacent positive electrode sheet groups;

9. The method for preparing a laminated battery cell according to claim 8, wherein the negative electrode sheet (100) comprises a single negative electrode current collector (110) and a single negative electrode active layer (120), the negative electrode active layer (120) is arranged on both sides of the negative electrode current collector (110), and a side, facing away from the negative electrode current collector (110), of the negative electrode active layer (120) is adhered to the membrane (300) on one side where the negative electrode active layers are located.

10. The method for preparing a laminated battery cell according to claim 8, wherein the negative electrode sheet (100) comprises a single negative electrode current collector (110) and a plurality of negative electrode active layers (120), the negative electrode active layers (120) are arranged on both sides of the negative electrode current collector (110), the negative electrode active layers (120) are arranged at intervals along a length direction of the negative electrode current collector (110), and the projection of the positive electrode sheets (200) in a thickness direction of the thermally bonded structure (20) falls within a plane area where the negative electrode active layers (120) are located; a distance between any two adjacent negative electrode active layers (120) is equal.

11. The method for preparing a laminated battery cell according to claim 9 or 10, wherein both sides of the negative electrode current collector (110) between every two adjacent negative electrode active layers (120) are bonded to corresponding first membrane (310) and second membrane (320); wherein negative electrode active material on the negative electrode sheet (100) is etched off by laser to form the plurality of negative electrode active layers (120).

12. The method for preparing a laminated battery cell according to any one of claims 9 to 11, wherein a thickness of the negative electrode current collector (110) is D1, 4 µm ≤ D1 ≤ 6 µm; a thickness of the negative electrode active layers (120) is D2, 50 µm ≤ D2 ≤ 200 µm; a distance between adjacent negative electrode active layers (120) is L, 1 mm ≤ L ≤ 3 mm.

13. The method for manufacturing a laminated battery cell according to any one of claims 1 to 4, wherein the thermally bonded structure (20) comprises n double-sided negative electrode sheet groups, M positive electrode sheet groups, a first membrane (310), and a second membrane (320),
wherein each of the double-sided negative electrode sheet groups comprises i double-sided negative electrode sheets (100B), each of the positive electrode sheet groups comprises i positive electrode sheets, where n and M are both positive integers, M - n = 1,
wherein the positive electrode sheet groups are arranged between the first membrane (310) and the second membrane (320), the double-sided negative electrode sheet groups and the positive electrode sheet groups are alternately arranged along a length direction of the thermally bonded structure (20), and the double-sided negative electrode sheet groups are thermally bonded to a side, facing away from the positive electrode sheet groups, of the first membrane (310) and to a side, facing away from the positive electrode sheet groups, of the second membrane (320),
wherein a projection of the positive electrode sheet (200) in a thickness direction of the thermally bonded structure (20) falls within a plane area in which the double-sided negative electrode sheets (100B) are located, and the folding structures (400) are formed in the first membrane (310) and/or the second membrane (320) between every two adjacent double-sided negative electrode sheet groups.

14. The method for preparing a laminated battery cell according to claim 13, further comprising steps of:
providing two single-sided electrode groups each including i single-sided negative electrode sheets (100A); and
folding the thermally bonded structure along each straight line where each of the folding structures (400) is located, and thermally bonding the single-sided electrode groups on outermost sides of the folded thermally bonded structure, respectively to prepare a laminated battery cell (10).

15. The method for preparing a laminated battery cell according to any one of claims 1 to 14, wherein each of the folding structures (400) comprise a plurality of through holes (410) arranged at intervals in the width direction of the thermally bonded structure (20).
